# FASCICULE DE BREVET EUROPEEN

(11) **EP 2 689 569 B1**
(45) Date de publication et mention de la délivrance du brevet: **08.04.2015**
(21) Numéro de dépôt: 12703134.2
(22) Date de dépôt: 13.02.2012
(51) Int. Cl.: H04L 29/06, H04L 29/08, H04L 12/24, G06F 21/00

(54) **DISPOSITIF DE CONNEXION À UN RÉSEAU DE HAUTE SÉCURITÉ**
VORRICHTUNG ZUR VERBINDUNG MIT EINEM HOCHSICHERHEITSNETZ
DEVICE FOR CONNECTING TO A HIGH SECURITY NETWORK

(30) Priorité: 22.03.2011 FR 1152369
(43) Date de publication de la demande: 29.01.2014
(73) Titulaire: SAGEM DEFENSE SECURITE, 92100 Boulogne Billancourt (FR)
(72) Inventeur: ROBIN, Lionel, F-75015 Paris (FR); LAROIS, Bruno, F-75015 Paris (FR); COUETTE, Cédric, F-75015 Paris (FR); MONOT, Thomas, F-75015 Paris (FR)
(74) Mandataire: Maillet, Alain
(86) Numéro de dépôt international: PCT/EP2012/052411
(87) Numéro de publication internationale: WO 2012/126674

(56) Documents cités:
- FR-A1- 2 927 181
- US-A1- 2009 132 111
- US-A1- 2010 174 812
- BOTTECK M ET AL: "Personal networks and Multimedia rendering", CONSUMER ELECTRONICS, 2008. ISCE 2008. IEEE INTERNATIONAL SYMPOSIUM ON, IEEE, PISCATAWAY, NJ, USA, 14 avril 2008 (2008-04-14), pages 1-4, XP031283669, ISBN: 978-1-4244-2422-1
- Avaya: "Secure Portable Office", , 2010, pages 1-4, XP002660586, Extrait de l'Internet: URL:http://www.avaya.com/uk/resource/asset s/brochures/dn5019.pdf [extrait le 2011-10-05]
- "Remote desktop software", INTERNET CITATION, 26 avril 2010 (2010-04-26), pages 1-3, XP002594709, Extrait de l'Internet: URL:http://en.wikipedia.org/w/index.php?ti tle=Remote_desktop_software&old id=358482121 [extrait le 2010-07-30]

## Description

La présente invention concerne le domaine de l'accès à un réseau de haute sécurité, et plus particulièrement un dispositif permettant un accès sécurisé, par exemple pour des opérations de gestion et de maintenance.

Dans de nombreux domaines, des sites sensibles sont gérés par un système d'information nécessitant un haut degré de sécurité et donc un contrôle d'accès de haute sécurité. On peut citer par exemple les centrales nucléaires, les installations spatiales, les aéronefs tant civils que militaires, les sous-marins, etc.

Les systèmes d'information qui gèrent ces sites partagent une contrainte de fiabilité et d'exigences de sécurité hautes. La sécurité se décline selon plusieurs axes, intégrité, confidentialité, disponibilité, fiabilité, anti intrusion, traçabilité des interventions entre autres. Ces systèmes obéissent à un cahier des charges strict visant à assurer ce niveau de sécurité.

En particulier, on dit d'un système, d'un appareil voire d'un utilisateur qu'il est de confiance (*trusted* en anglais) s'il répond au cahier des charges et est géré selon les procédures de sécurité prescrites. Au contraire, un système ou un appareil ne répondant pas à ces procédures n'est pas de confiance (*non trusted* en anglais).

Les systèmes d'information de haute sécurité doivent donc être de confiance et obéir au cahier des charges de sécurité. Lors de leur fonctionnement normal, ces systèmes sont typiquement isolés, leur niveau de sécurité peut donc être garanti.

Toutefois, ces systèmes doivent subir des interventions de maintenance. Ces interventions de maintenance comprennent la gestion du système, le changement de paramètres, les adaptations. Elles comprennent également la récupération des données opérationnelles (*log data* en anglais). Elles comprennent enfin la mise à jour de modules logiciels pour permettre l'évolution du système. Ces actions sont très délicates au niveau de la sécurité, car l'on vient modifier un système de confiance et il est alors indispensable de garantir que l'on ne peut pas compromettre la fiabilité du système lors de cette opération.

Ces opérations de maintenance nécessitent la connexion d'un système extérieur au système de haute sécurité. Ce système extérieur doit alors être lui-même de confiance, c'est-à-dire être géré selon un cahier des charges précis et cohérent avec le système de haute sécurité pour garantir la confiance de l'opération de maintenance.

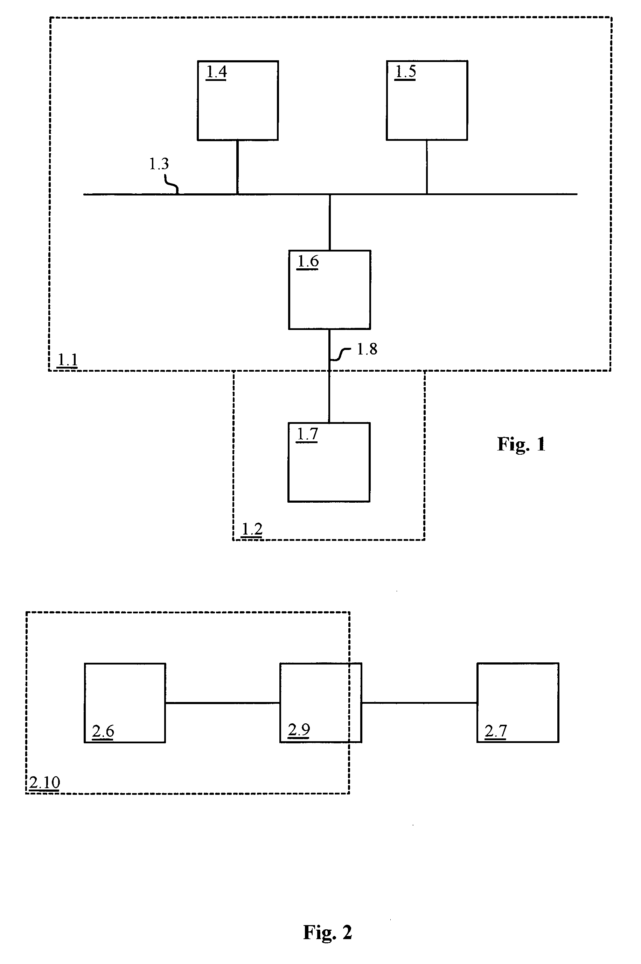

La Fig. 1 décrit un tel système. Le système de haute sécurité 1.1 est composé d'un réseau de communication 1.3 qui relie plusieurs sous-systèmes, typiquement des calculateurs, 1.4 et 1.5 chargés de la gestion du site. Un point d'accès 1.6 est également connecté au réseau de communication. Ce point d'accès permet la connexion à la demande d'un terminal 1.7 dédié à la maintenance du système. La connexion entre le terminal de maintenance 1.7 et le point d'accès 1.6 peut être faite par une connexion filaire telle qu'une connexion Ethernet ou encore une connexion sans fil telle qu'une connexion WiFi ou autre. Généralement le point d'accès 1.6 dispose d'un pare-feu (*firewall* en anglais) permettant de limiter les flux de données passant sur le lien 1.8 aux flux strictement nécessaires et prévus pour la maintenance du système. Le terminal de maintenance est typiquement un ordinateur portable que l'on vient connecter au réseau du système sécurisé. Typiquement lorsque le lien de connexion 1.8 n'est pas un lien filaire direct, par exemple lorsqu'il s'agit d'un lien sans fil ou d'un lien au travers d'un réseau, la connexion 1.8 est sécurisée à l'aide d'un tunnel chiffré entre le terminal 1.7 et le point d'accès 1.6.

On définit le périmètre de confiance comme la frontière séparant le système de haute sécurité et ses périphériques d'une part, dont tous les éléments doivent tous être de confiance, et d'autre part les appareils et réseaux externes n'obéissant pas aux mêmes contraintes.

Le maintien des règles de sécurité demande à ce que le périmètre de confiance 1.1 soit alors étendu à un périmètre de confiance 1.1 plus 1.2 qui comprend l'appareil de maintenance. Typiquement l'appareil de maintenance est dit de confiance et doit obéir à des règles de gestion strictes. Typiquement, cet appareil ne doit comporter que les modules logiciels prescrits, il doit être manipulé uniquement par des personnes habilitées et dument identifiées. Il doit être rangé dans un espace à accès restreint, un coffre-fort par exemple, en dehors des opérations de maintenance. Ces règles ici décrites ne sont qu'un exemple non exhaustif des règles applicables dans un cas particulier. Dans tous les cas, il s'avère que la gestion de ces appareils de maintenance est un processus lourd et contraignant à gérer pour l'opérateur du système de haute sécurité.

On connaît par le document FR-A-2 927 181 un système de haute-sécurité connecté à un dispositif de connexion dans lequel le dispositif de connexion est intercalé entre le système de haute-sécurité et un terminal de maintenance. Le problème que se propose de résoudre la présente invention est, par rapport à ce document, la réduction de la complexité et de la lourdeur de la gestion du terminal impliqué dans la maintenance du système de haute sécurité, tout en assurant le niveau de sécurité requis.

On connaît également un article de BOTTECK M et Al intitulé "Personal networks and Multimedia rendering" publié dans Consumer Electronics, 2008, ISCE 2008. Ce document, s'il décrit bien un dispositif de connexion, il ne propose néanmoins pas de solution au problème qui est évoqué ci-dessus.

L'invention est définie dans la revendication indépendante 1.

L'invention vise à résoudre les problèmes précédents par un dispositif de connexion permettant de connecter un appareil de maintenance quelconque à un réseau de haute sécurité sans compromettre la confiance du système. Le dispositif contient un client de l'applicatif de maintenance dont seules les entrées-sorties sont déportées sur l'appareil de maintenance. Il dispose de moyens d'authentification et de moyens pour effectuer une rupture de protocole entre l'appareil de maintenance et le système de haute sécurité. De cette façon, seul ledit dispositif de connexion doit être de confiance et la maintenance peut se faire à partir d'un terminal quelconque.

L'invention concerne un dispositif de connexion qui comprend un premier lien de connexion permettant la connexion dudit dispositif à un système de haute sécurité ; un second lien de connexion permettant la connexion dudit dispositif à un terminal ; un client de maintenance pouvant dialoguer au travers du premier lien de connexion avec un serveur de maintenance au sein dudit système de haute sécurité ; un serveur de connexion à distance permettant à un utilisateur de contrôler le client de maintenance depuis ledit terminal ; et qui ne comprend pas de moyens de routage pour permettre à un flux de données de transiter entre ledit terminal et ledit système de haute sécurité.

Selon un mode particulier de réalisation de l'invention, il comprend en outre un pare-feu sur le premier lien de connexion pour contrôler les flux entre ledit dispositif et le système de haute sécurité et un pare-feu sur le second lien de connexion pour contrôler les flux entre ledit dispositif et le terminal.

Selon un mode particulier de réalisation de l'invention, il comporte en outre des moyens d'authentification pour authentifier l'utilisateur.

Selon un mode particulier de réalisation de l'invention, il comporte des moyens pour conditionner le démarrage du système à l'authentification réussie de l'utilisateur.

Selon un mode particulier de réalisation de l'invention, il comporte des moyens pour conditionner l'établissement d'un tunnel chiffré entre ledit dispositif et ledit système de haute sécurité à l'authentification réussie de l'utilisateur.

Selon un mode particulier de réalisation de l'invention, il comprend un composant de carte à puce permettant le stockage des crédits d'authentification et les moyens cryptologiques nécessaires à l'établissement d'un tunnel chiffré entre ledit dispositif et le système de haute sécurité.

Selon un mode particulier de réalisation de l'invention, il comprend en outre des moyens de monter un volume disponible dudit terminal de façon à le rendre accessible audit client de maintenance.

L'invention concerne également un procédé de connexion d'un terminal de maintenance à un serveur de maintenance au sein d'un système de haute sécurité à l'aide d'un dispositif de connexion précédemment décrit qui comporte une étape de branchement dudit dispositif au terminal ; une étape d'établissement d'un tunnel entre ledit dispositif et ledit système de haute sécurité ; une étape de connexion à distance depuis ledit terminal vers ledit dispositif et une étape de connexion dudit client de maintenance au serveur de maintenance via ladite connexion à distance.

Selon un mode particulier de réalisation de l'invention, il comporte en outre une étape d'authentification de l'utilisateur et une étape de conditionnement du démarrage du système du dispositif conditionnée par la réussite de l'étape d'authentification.

Selon un mode particulier de réalisation de l'invention, il comporte en outre une étape d'authentification de l'utilisateur et une étape de conditionnement de l'établissement dudit tunnel conditionné par la réussite de l'étape d'authentification.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 illustre l'architecture générale d'un système de haute sécurité et de son appareil de maintenance selon l'art antérieur.
La Fig. 2 illustre l'architecture générale de l'invention.
La Fig. 3 illustre l'architecture logicielle générale de l'invention.
La Fig. 4 illustre l'architecture logicielle d'un exemple de réalisation du dispositif selon l'invention.
La Fig. 5 illustre l'architecture logicielle gérant la connexion du dispositif au sein du système de haute sécurité selon un exemple de réalisation de l'invention.
La Fig. 6 illustre le procédé de connexion d'un terminal de maintenance à un système de haute sécurité selon un exemple de réalisation de l'invention.

L'invention est basée sur l'utilisation d'un dispositif de connexion 2.9 qui permet de connecter un terminal de maintenance 2.7 à un réseau de haute sécurité par l'intermédiaire de son point d'accès 2.6. Contrairement à l'art antérieur qui nécessitait une extension du périmètre de confiance 1.1 plus 1.2 qui intègre le terminal de maintenance 1.7, l'invention permet une extension de ce périmètre de confiance 2.10 qui n'intègre que ledit dispositif de connexion et non plus le terminal de maintenance en lui-même. De par sa conception, les procédures de sécurité devant être appliquées à la gestion de ce dispositif de connexion pour assurer la confiance sont plus légères que celles devant être appliquées à un terminal de confiance. Tout terminal peut être utilisé pour les opérations de maintenance sans nécessiter de gestion particulière, celui-ci ne faisant pas partie du périmètre de confiance.

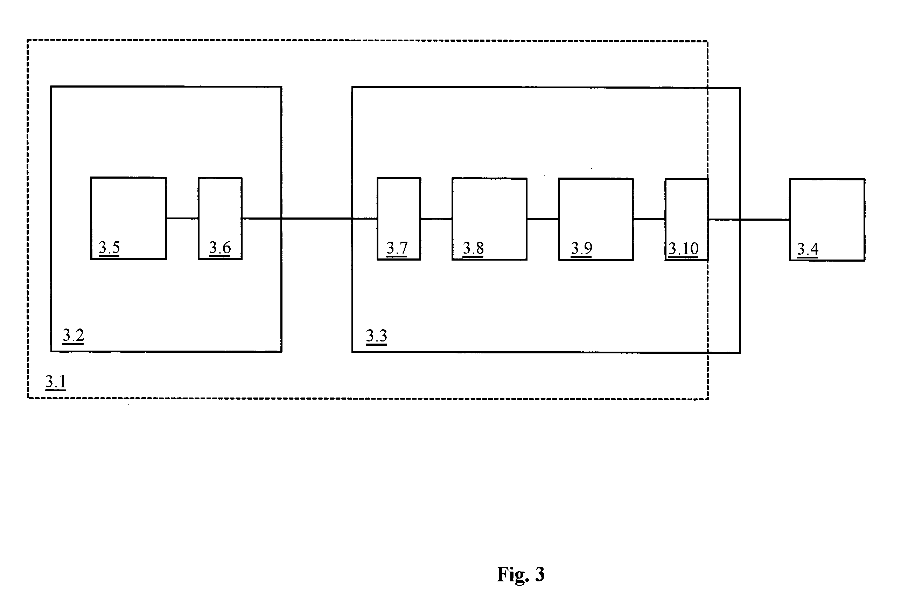

L'architecture logicielle générale de l'invention est illustrée par la Fig. 3. Cette figure détaille la Fig. 2. On retrouve le périmètre de confiance 3.1 qui comprend le système de haute sécurité proprement dit 3.2 et le dispositif de connexion 3.3. En dehors de ce périmètre de confiance, le terminal de maintenance 3.4 permet à l'opérateur de gérer la maintenance du système. Les opérations de maintenance sont gérées sur une mode client-serveur. Le système de haute sécurité héberge un serveur de maintenance 3.5 qui dialogue avec un client de maintenance 3.8 hébergé par le dispositif de connexion. Typiquement, le client permet l'affichage d'un menu de maintenance permettant de choisir un type d'opération de maintenance qui comprend par exemple des opérations de paramétrage, la récupération de données opérationnelles et la mise à jour de modules logiciels au sein du système 3.2.

Le lien de connexion entre le dispositif 3.3 et le système 3.2 est géré par les modules de gestion de lien 3.6 et 3.7. La technologie dudit lien peut être quelconque, filaire ou sans fil, direct ou transitant par un réseau de communication. Typiquement il s'agit d'un lien de connexion Ethernet, WiFi, éventuellement passant au travers du réseau de l'opérateur de gestion du système. Le réseau en question n'est pas nécessairement un réseau de confiance. En effet, les modules 3.6 et 3.7 établissent un tunnel chiffré entre le dispositif de confiance et le système. C'est ce tunnel chiffré qui garantit le périmètre de confiance entre les deux appareils, et ce quelle que soit la couche de transport sous-jacente utilisée. Avantageusement, les modules de gestion du lien comprennent également un module pare-feu pour assurer que seuls les flux de données échangés entre le client 3.8 et le serveur de maintenance 3.5 puissent transiter sur le lien.

Le dispositif de connexion 3.3 est typiquement dépourvu de tout moyen d'entrée-sortie en dehors des liens le connectant au système d'une part et au terminal de maintenance d'autre part. Selon le mode de réalisation préféré, il s'agit d'un simple dispositif du type « clé USB ». Il est donc nécessaire que l'utilisateur gérant la maintenance puisse contrôler le client 3.8 depuis le terminal de maintenance 3.4. Pour ce faire le dispositif de connexion comprend également un terminal de connexion à distance 3.9 qui permet de déporter l'affichage du client 3.8 sur le terminal de maintenance 3.4. De manière symétrique, les entrées du terminal sont redirigées vers le serveur de connexion à distance 3.9 pour opérer sur le client 3.8. Il s'agit typiquement des entrées du clavier et du périphérique de pointage, souris ou autres.

On peut utiliser le procotole RDP (*Remote Desktop Protocol* en anglais) de Microsoft ou encore les protocoles proposés par la société CITRIX.

Le lien entre le dispositif de connexion 3.3 et le terminal 3.4 peut reposer sur toute technologie. Le mode de réalisation décrit une connexion à l'aide d'un lien série de type USB (*Universal Serial Bus* en anglais), mais toute autre technologie peut être utilisée filaire telle que Ethernet ou une technologie sans fil comme Bluetooth. Avantageusement, un pare-feu 3.10 permet de s'assurer que seuls les flux d'entrée-sortie prévus peuvent transiter par le lien entre le terminal et le dispositif de connexion 3.10.

Le dispositif repose sur un système d'exploitation qui permet de faire fonctionner les modules décrits. Avantageusement, le dispositif dispose également de moyens d'authentifier l'utilisateur, par exemple un lecteur d'empreintes digitales. Le démarrage du système d'exploitation ou simplement l'établissement du tunnel avec le système de haute sécurité peut être soumis à la validation de l'authentification. Le dispositif dispose également de crédits d'authentification, par exemple sous la forme de certificats numériques, permettant l'établissement dudit tunnel. Selon un mode de réalisation particulier de l'invention, les crédits d'authentification et les moyens cryptologiques nécessaires à l'établissement du tunnel sont intégrés au dispositif sous la forme d'un composant de carte à puce. Selon un autre mode de réalisation, l'intégralité de l'architecture du dispositif est intégrée au sein d'un composant de carte à puce.

Il est à noter que le dispositif n'agit pas en tant que passerelle. Il ne comprend pas de moyens de routage qui puissent permettre à un flux de données de transiter entre le terminal de maintenance 3.4 et le système de haute sécurité 3.2. Cette rupture de protocole est primordiale pour assurer la sécurité du système.

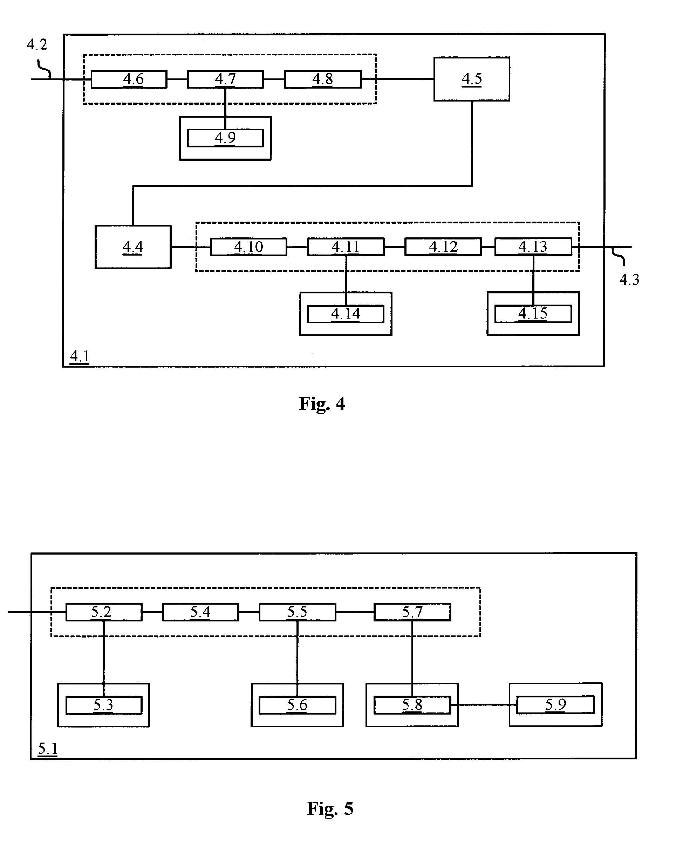

La Fig. 4 illustre l'architecture logicielle du dispositif de connexion 4.1 du mode de réalisation de l'invention. Dans cet exemple, le lien vers le terminal de maintenance est un lien USB 4.2. Le système d'exploitation est un système dérivé du système libre « Linux ». La gestion du lien est faite par les modules 4.6, 4.7 et 4.8 dans le noyau du système d'exploitation, ce qui est illustré par le rectangle en pointillés. Le module 4.6 est le pilote du lien USB. Le module 4.7 apporte la couche réseau TCP/IP pour communiquer avec le terminal. Ce module est, par exemple, basé sur le protocole RNDIS (*Remote Network Driver Interface Specification* en anglais) de Microsoft. Pour obtenir les paramètres du réseau, typiquement son adresse IP, il coopère avec un serveur DHCP (*Dynamic Host Control Protocol* en anglais) local 4.9. Avantageusement, ce dernier fonctionne de manière isolée au sein du système pour des raisons de sécurité. Cette isolation consiste à séparer l'exécution du processus au sein de son propre espace dans le système d'exploitation. On peut, par exemple, utiliser le mécanisme de prison (*jail* en anglais) existant dans le système Linux. L'avantage est qu'un attaquant qui réussirait à prendre le contrôle du processus reste isolé dans la prison et ne peut pas voir le reste du système.

Le module 4.8 est une fonction de filtrage de type pare-feu réseau ou applicatif qui permet de limiter les flux échangés avec le terminal aux flux autorisés, typiquement les flux du protocole RDP.

Le serveur de connexion à distance 4.5 est basé sur RDC dans cet exemple. Il permet au terminal d'afficher l'interface du client 4.4 et d'interagir avec celui-ci. Le client 4.4 est un client propriétaire qui dépend du système de haute sécurité visé. Il est prévu pour se connecter au serveur de maintenance correspondant au sein du système de haute sécurité. Les modules 4.5 du serveur de connexion à distance et 4.4 du client de maintenance sont exécutés dans l'espace applicatif du système d'exploitation.

La gestion du lien vers le système est faite par les modules 4.10, 4.11, 4.12 et 4.13 implémentés dans l'espace du noyau du système d'exploitation. Le module 4.11 implémente le tunnel chiffré en coopération avec un serveur de tunnel 4.14. Avantageusement, le serveur de tunnel fonctionne également de manière isolée au sein d'une prison. Tout protocole de tunnel chiffré peut être utilisé, par exemple IPsec (*Internet Protocol Security* en anglais), mais aussi SSL (*Secure Socket Layer* en anglais), PPTP (*Point to Point Tunneling Protocol* en anglais), ou autres. Le module 4.13 est le pilote réseau, typiquement un pilote Ethernet, qui établit le lien avec le système de haute sécurité en coopération avec un autre serveur de configuration réseau DHCP 4.15. Ce dernier est également isolé de manière avantageuse au sein d'une prison. Le lien 4.3 permet la connexion physique avec le système de haute sécurité. Ce lien peut être un lien filaire, par exemple du type Ethernet ou autre. Il peut encore être du type sans fil tel que WiFi ou radio fréquence. Avantageusement, le dispositif dispose d'un port physique de connexion filaire et d'une interface sans fil, les deux pouvant être utilisés à la convenance de l'utilisateur.

Les modules 4.10 et 4.12 sont des modules de filtrage de flux (type pare-feu) pour le contrôle des flux échangés provenant de l'interface 4.3 : le module 4.10 filtre le contenu des flux (filtrage de type applicatif, couche haute) tandis que le module 4.12 autorise uniquement les flux selon des critères réseaux.

Des moyens d'authentifications de l'utilisateur non représentés conditionnent avantageusement le démarrage du système ou l'établissement du tunnel. Ces moyens peuvent être divers. On peut citer de manière non limitative un lecteur d'empreintes digitales ou tout autre capteur biométrique, un système de code personnel à entrer, un lecteur d'étiquette radio fréquence (*RFID tag* en anglais).

La Fig. 5 illustre l'architecture logicielle gérant la connexion du dispositif au sein du système de haute sécurité selon un exemple de réalisation de l'invention. Cette architecture reprend en grande partie le symétrique de l'architecture du dispositif en ce qui concerne la gestion du lien entre les deux. On retrouve le pilote Ethernet 5.2 qui coopère avec un serveur de configuration réseau DHCP 5.3. En aval, un module pare-feu 5.4 contrôle les flux qui transitent. Un module de gestion de tunnel chiffré 5.5 gère le tunnel côté système en coopération avec le serveur de tunnel 5.6. Un second pare-feu 5.7 filtre les flux déchiffrés issus du tunnel. Avantageusement, le flux de données entre le client de maintenance 4.4 et le serveur de maintenance 5.9 transite par un module de relais (*proxy* en anglais) 5.8 pour éviter une connexion directe et permettre un filtrage sur les données échangées. Les modules DHCP, serveur de tunnel et relais sont avantageusement isolés dans des prisons respectives.

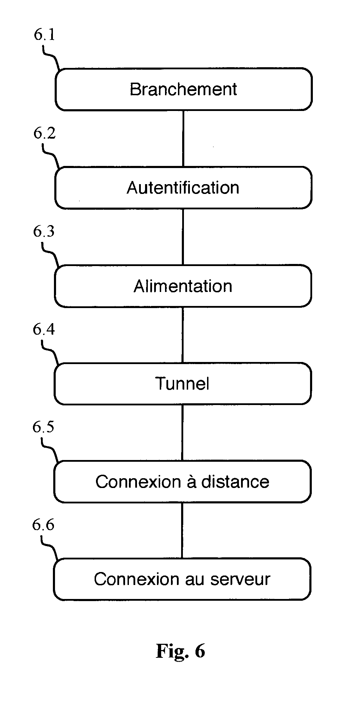

La Fig. 6 illustre le procédé de connexion d'un terminal de maintenance à un serveur de maintenance au sein d'un système de haute sécurité selon un mode de réalisation de l'invention. Lors d'une étape 6.1, on branche le dispositif sur le terminal. Dans certains modes de réalisation, il s'agit d'une connexion via un lien de connexion en fonction du type de lien entre le terminal et le dispositif. Avantageusement, lors de l'étape 6.2 intervient l'authentification de l'utilisateur via les moyens d'authentification. Si cette authentification est positive, le système démarre. Il peut s'agir de la mise sous tension, ou alimentation de la carte mère, du démarrage du système ou simplement de l'autorisation de l'établissement du tunnel. Le tunnel entre le dispositif et le système hôte est alors établi lors de l'étape 6.4. Le serveur de connexion à distance est lancé et la connexion est établie entre le terminal et le dispositif lors de l'étape 6.5. Cette étape peut être faite avant ou après l'établissement du tunnel. Lors de l'étape 6.6, l'utilisateur utilise via la connexion à distance le client de maintenance hébergé sur le dispositif pour établir la connexion au serveur de maintenance.

Avantageusement, le système d'exploitation du dispositif permet également de monter un volume extérieur au dispositif. De cette manière, le client de maintenance peut accéder audit volume. Ce volume peut servir à lire des versions de logiciels qui pourront être téléchargés à destination du système de haute sécurité pour des mises à jour logicielles. Ces mises à jour sont avantageusement des modules chiffrés et signés dont on peut assurer la confidentialité, l'origine et l'intégrité. Le volume distant peut également servir à stocker les données opérationnelles récupérées auprès du système de haute sécurité. Selon le mode de réalisation, le volume distant rendu accessible au dispositif de connexion peut être un volume local prédéfini du terminal de maintenance, ou un lecteur optique accessible en lecture seule, il ne permet pas alors le stockage. Il peut également être un volume disponible sur le réseau de l'opérateur auquel peut être connecté le terminal de maintenance. Le montage peut être fait selon n'importe quel protocole standard de montage de volume disant, par exemple NFS (*Network File System* en anglais) ou une implémentation de SMB/CIFS (*Server Message Block*/*Common Internet File System* en anglais) telle que Samba.

## Revendications

1. Dispositif de connexion (3.3 ; 4.1) comprenant :
- une interface adaptée à un premier lien de connexion (4.2) permettant la connexion dudit dispositif à un système de haute sécurité (3.2 ; 5.1);
- une interface adaptée à un second lien de connexion (4.3) permettant la connexion dudit dispositif à un terminal (3.4);
- un client de maintenance (3.8) pouvant dialoguer au travers du premier lien de connexion avec un serveur de maintenance (3.5 ; 5.9) au sein dudit système de haute sécurité (3.2 ; 5.1) ;
- des moyens de rupture de protocole empêchant à un flux de données de transiter par routage entre ledit terminal (3.4) et ledit système de haute sécurité (3.2; 5.1);
**caractérisé en ce qu'**il comprend en outre :
- un serveur de connexion à distance (4.5) permettant à un utilisateur de contrôler le client de maintenance (4.4) depuis ledit terminal (3.4), ledit serveur de connexion (4.5) étant adapté pour déporter un affichage du client de maintenance sur ledit terminal (3.4) et pour permettre audit terminal (3.4) de rediriger des entrées pour opérer sur le client de maintenance (4.4).

2. Dispositif de connexion selon la revendication 1, **caractérisé en ce qu'**il comprend en outre :
- un pare-feu (4.8) sur le premier lien de connexion (4.3) pour contrôler les flux entre ledit dispositif et le système de haute sécurité (3.2) ;
- un pare-feu (3.10 ; 4.10) sur le second lien de connexion (4.2) pour contrôler les flux entre ledit dispositif et le terminal (3.4).

3. Dispositif de connexion selon l'une des revendications 1 ou 2, **caractérisé en ce qu'**il comporte en outre des moyens d'authentification pour authentifier l'utilisateur.

4. Dispositif de connexion selon la revendication 3, **caractérisé en ce qu'**il comporte des moyens pour conditionner le démarrage du système à l'authentification réussie de l'utilisateur.

5. Dispositif de connexion selon la revendication 3, **caractérisé en ce qu'**il comporte des moyens pour conditionner l'établissement d'un tunnel chiffré entre ledit dispositif et ledit système de haute sécurité (3.2 ; 5.1) à l'authentification réussie de l'utilisateur.

6. Dispositif de connexion selon la revendication 3, **caractérisé en ce qu'**il comprend un composant de carte à puce permettant le stockage des crédits d'authentification et les moyens cryptologiques nécessaires à l'établissement d'un tunnel chiffré entre ledit dispositif et le système de haute sécurité (3.2 ; 5.1) .

7. Dispositif de connexion selon l'une des revendications 1 à 6, **caractérisé en ce qu'**il comprend en outre des moyens de monter un volume disponible dudit terminal (3.4) de façon à le rendre accessible audit client de maintenance (4.4).

## Patentansprüche

1. Verbindungsvorrichtung (3.3; 4.1), welche folgendes umfasst:
- eine an ein erstes Verbindungsglied (4.2) angepasste Schnittstelle, welche die Verbindung der Vorrichtung mit einem Hochsicherheitssystem (3.2; 5.1) ermöglicht;
- eine an ein zweites Verbindungsglied (4.3) angepasste Schnittstelle, welche die Verbindung der Vorrichtung mit einem Endgerät (3.4) ermöglicht;
- einen Wartungsclient (3.8), der über das erste Verbindungsglied einen Dialog mit einem Wartungsserver (3.5; 5.9) innerhalb des Hochsicherheitssystems (3.2; 5.1) führen kann;
- Protokollunterbrechungsmittel, die verhindern, dass zwischen dem Endgerät (3.4) und dem Hochsicherheitssystem (3.2; 5.1) ein Datenstrom durch Routing durchkommt;
**dadurch gekennzeichnet, dass** sie außerdem folgendes umfasst:
- einen Fernverbindungsserver (4.5), der einem Benutzer ermöglicht, den Wartungsclient (4.4) von dem Endgerät (3.4) aus zu kontrollieren, wobei der Verbindungsserver (4.5) geeignet ist, eine Anzeige des Wartungsclient auf das Endgerät (3.4) auszulagern und dem Endgerät (3.4) zu ermöglichen, Eingaben umzuleiten, um auf dem Wartungsclient (4.4) zu arbeiten.

2. Verbindungsvorrichtung nach Anspruch 1, **dadurch gekennzeichnet, dass** sie außerdem folgendes umfasst:
- eine Firewall (4.8) auf dem ersten Verbindungsglied (4.3), um die Datenströme zwischen der Vorrichtung und dem Hochsicherheitssystem (3.2) zu kontrollieren;
- eine Firewall (3.10; 4.10) auf dem zweiten Verbindungsglied (4.2), um die Datenströme zwischen der Vorrichtung und dem Endgerät (3.4) zu kontrollieren.

3. Verbindungsvorrichtung nach einem der Ansprüche 1 oder 2, **dadurch gekennzeichnet, dass** sie außerdem Authentifizierungsmittel zum Authentifizieren des Benutzers aufweist.

4. Verbindungsvorrichtung nach Anspruch 3, **dadurch gekennzeichnet, dass** sie Mittel dafür aufweist, den Start des Systems an die Bedingung zu knüpfen, dass die Authentifizierung des Benutzers erfolgreich war.

5. Verbindungsvorrichtung nach Anspruch 3, **dadurch gekennzeichnet, dass** sie Mittel dafür aufweist, die Errichtung eines verschlüsselten Tunnels zwischen der Vorrichtung und dem Hochsicherheitssystem (3.2; 5.1) an die Bedingung zu knüpfen, dass die Authentifizierung des Benutzers erfolgreich war.

6. Verbindungsvorrichtung nach Anspruch 3, **dadurch gekennzeichnet, dass** sie eine Chipkartenkomponente, welche die Speicherung der Authentifizierungsmittel ermöglicht, und die kryptologischen Mittel, welche zur Errichtung eines verschlüsselten Tunnels zwischen der Vorrichtung und dem Hochsicherheitssystem (3.2; 5.1) erforderlich sind, umfasst.

7. Verbindungsvorrichtung nach einem der Ansprüche 1 bis 6, **dadurch gekennzeichnet, dass** sie außerdem Mittel dafür umfasst, ein verfügbares Laufwerk des Endgeräts (3.4) so zu binden, dass es für den Wartungsclient (4.4) zugänglich gemacht wird.

## Claims

1. Connection device (3.3 ; 4.1) comprising:
- An interface adapted to a first connection link (4.2), allowing the connection of the said device to a high security system (3.2 ; 5.1);
- an interface adapted to a second connection link (4.3) allowing the connection of the said device to a terminal (3.4);
- a maintenance client (3.8), capable of dialoguing over the first connection link with a maintenance server (3.5; 5.9) within the said high security system (3.2 ; 5.1) ;
- means for performing a break of protocol, preventing a flood of data from passing by routing between the said terminal (3.4) and the said high security system (3.2; 5.1); **characterized in that** it comprises, among other elements:
- A remote connection server (4.5) allowing a user to control the maintenance client (4.4) from the said terminal (3,4), the said connection server (4.5) being adapted to convey a maintenance client display on the said terminal (3.4) and to allow the said terminal (3.4) to redirect inputs for operations on the maintenance client (4.4).

2. Connection device according to claim 1, **characterized in that** it comprises, among other elements:
- A firewall (4.8) on the first connection link (4.3) to control the flows between the said device and the high security system (3.2);
- a firewall (3.10 ; 4.10) on the second connection link (4.2) to control the flows between the said device and the terminal (3.4).

3. Connection device according to one of claims 1 or 2, **characterized in that** it comprises, among other elements, authentication means to authenticate the user.

4. Connection device according to claim 3, **characterized in that** it comprises means for controlling the starting of the system upon the successful authentication of the user.

5. Connection device according to claim 3, **characterized in that** it comprises means for controlling the establishment of a coded tunnel between the said device and the said high security system (3.2 ; 5.1) upon the successful authentication of the user.

6. Connection device according to claim 3, **characterized in that** it comprises a chip card allowing for the storage of the authentication credits, and the cryptology means necessary for the establishment of a coded tunnel between the said device and the high security system (3.2 ; 5.1).

7. Connection device according to one of claims 1 to 6, **characterized in that** it comprises, among other elements, means for setting up an available volume of the said terminal (3.4) in such as way as to render it accessible to the said maintenance client (4.4).
